# EUROPÄISCHE PATENTSCHRIFT

(11) **EP 3 401 891 B1**
(45) Veröffentlichungstag und Bekanntmachung des Hinweises auf die Patenterteilung: **28.12.2022**
(21) Anmeldenummer: 17170224.4
(22) Anmeldetag: 09.05.2017
(51) Int. Cl.: G08G 1/16, G05D 1/02, G08G 9/02, H04W 4/40, H04W 4/70

(54) **DISTRIBUTED CONSENSUS NETWORKS MIT MOBILE EDGE COMPUTING UNTERSTÜTZUNG**
DISTRIBUTED CONSENSUS NETWORKS SUPPORTING MOBILE EDGE COMPUTING
RÉSEAUX COMMUNS DISTRIBUÉS PRÉSENTANT UNE ASSISTANCE INFORMATIQUE MOBILE EN PÉRIPHÉRIE DE RÉSEAU

(43) Veröffentlichungstag der Anmeldung: 14.11.2018
(73) Patentinhaber: Deutsche Telekom AG, 53113 Bonn (DE)
(72) Erfinder: HEIDER-AVIET, Andreas, 13187 Berlin (DE); HETZER, Dirk, 12683 Berlin (DE)
(74) Vertreter: Vossius & Partner Patentanwälte Rechtsanwälte mbB

(56) Entgegenhaltungen:
- DE-A1-102012 015 968
- DE-A1-102012 021 282
- EDUARDO CASTELL\'O FERRER: "The blockchain: a new framework for robotic swarm systems", ARXIV.ORG, CORNELL UNIVERSITY LIBRARY, 201 OLIN LIBRARY CORNELL UNIVERSITY ITHACA, NY 14853, 2. August 2016 (2016-08-02), XP080717679,
- CHIANG MUNG ET AL: "Fog and IoT: An Overview of Research Opportunities", IEEE INTERNET OF THINGS JOURNAL, IEEE, USA, Bd. 3, Nr. 6, 1. Dezember 2016 (2016-12-01), Seiten 854-864, XP011638967, DOI: 10.1109/JIOT.2016.2584538 [gefunden am 2017-01-09]

## Beschreibung

Die Erfindung betrifft die Automatisierung von Maschinen, insbesondere die Koordinierung von Bewegungen autonomer Internet of Things (Internet der Dinge) Geräte.

In einer digitalisierten Umgebung werden zunehmend intelligente Gegenstände verwendet, die auch zunehmend mit künstlicher Intelligenz ausgestattet sind. Gemeinsam bilden diese intelligenten Gegenstände das Internet of Things (IOT). Im IOT miteinander vernetzte intelligente Geräte werden als IOT Geräte bezeichnet. Das IOT soll zukünftig den Menschen unterstützen, wobei der Mensch nicht unbedingt mit den einzelnen Geräten steuernd interagiert, stattdessen sollen sich einzelne IOT Geräte untereinander abstimmen und so den Menschen von der Steuerung entlasten. Neben mehr oder weniger unbeweglichen, zumindest nicht selbstständig zu einer Bewegung fähigen, IOT Geräten, gibt es auch IOT Geräte, die sich selbstständig bewegen und im Folgenden als autonome IOT Geräte bezeichnet werden.

Unter dem Begriff autonome IOT Geräte fallen ausdrücklich auch jene Geräte, die üblicherweise als teilautonom, automatisiert bzw. teilautomatisiert, selbst organisiert oder selbst kontrolliert bezeichnet werden. Je nach verwendeter Definition ergeben sich aus den Begriffen besondere Abgrenzungen. Die autonomen IOT Geräte dieser Beschreibung zeichnen sich dadurch aus, dass sie voneinander und vorzugsweise auch von zentraler und/oder menschlicher Kontrolle unabhängig sind.

Sobald sich mehrere autonome IOT Geräte in einem räumlich begrenzten Gebiet befinden und sich mindestens eines der autonomen IOT Geräte bewegt, ist eine Abstimmung der Bewegungen zwischen den mehreren IOT Geräten notwendig. Nur so können Zusammenstöße der Geräte und damit verbundene Schäden abgewendet werden. Die Koordination von autonomen IOT Geräten ist eine große technische Herausforderung und stellt die Grundaufgabe dieser Erfindung dar.

Prinzipiell wäre eine zentrale Koordination mehrerer autonomer IOT Geräte, die sich gleichzeitig in einem räumlichen Gebiet befinden und/oder eine zentrale Koordination aller autonomen IOT Geräte in mehreren räumlichen Gebieten, die aneinander angrenzen oder sich sogar überlappen, möglich. Jedoch stellt die Anzahl und die Komplexität der notwendigen Abstimmungsprozesse hohe Herausforderungen an die Verfahren und Systeme einer solchen zentralen Koordination. Neben einer hohen Rechenleistung wird auch eine große Kommunikationsbandbreite benötigt. Insbesondere, bei einer dynamisch veränderlichen Anzahl von beteiligten autonomen IOT Geräten, ist die Umsetzung einer zentralen Koordination äußerst komplex.

Eduardo Castelló Ferrer "The blockchain: a new framework for robotic swarm systems" arXiv.org; DOI: 10.1007/978-3-030-02683-7_77; arXiv:1608.00695; beschreibt Sicherheits-, Entscheidungsfindungs-, Verhaltensdifferenzierungs- und Geschäftsmodelle für Schwarmrobotersysteme anhand von Fallbeispielen.

Es ist daher eine Aufgabe der vorliegenden Erfindung, ein System und Verfahren zur Verfügung zu stellen, das erlaubt, die Bewegung mehrerer autonomer IOT Geräte innerhalb eines räumlichen Gebietes zu koordinieren, ohne dabei jedes einzelne dieser autonomen IOT Geräte direkt und/oder zentral steuern zu müssen.

Ferner soll es aber in bestimmten Anwendungsfällen möglich sein auf die Koordinierung und/oder Kontrolle Einfluss zu nehmen und bestimmte Entscheidungen zentral zu treffen.

Autonome IOT Geräte müssen untereinander kommunizieren und ihre Bewegung muss koordiniert werden. Insbesondere für die Vermeidung von Unfällen und für einen gleichmäßigen Betriebsablauf ist eine Koordination von besonderer Bedeutung.

Ferner wird eine Nachvollziehbarkeit von Bewegungen der autonomen IOT Geräte gefordert, damit diese später ausgewertet werden können. Anwendungen für eine solche Auswertung sind beispielsweise die Verbesserung von Verhaltensregeln, insbesondere für die Verbesserung der Programmierung autonomer Steuerungsabläufe, aber auch die Klärung von Schuldfragen, sollte es zu einer Kollision gekommen sein.

Ferner wird ein möglichst flächendeckend einsetzbares System zur Koordinierung und/oder Kontrolle von autonomen IOT Geräten benötigt.

Weitere Aufgaben ergeben sich aus der Notwendigkeit einer schnellen, sicheren, automatischen, dezentralen und transparenten Abstimmung mehrerer autonomer IOT Geräte, sowie aus der Notwendigkeit einer nachträglichen Auditierbarkeit der Koordination.

Diese Aufgaben werden von dem erfindungsgemäßen Gegenstand der unabhängigen Patentansprüche gelöst. Die abhängigen Ansprüche betreffen weitere Aspekte der Erfindung.

Erfindungsgemäß wird ein System und ein Verfahren auf den Prinzipien einer sogenannten Blockchain aufgebaut, um eine Koordinierung autonomer IOT Geräte in einem dezentralen und/oder teilweise dezentralen Konsens bildenden Netzwerk zu nutzen. Ein solches Netzwerk wird als Distributed Concensus Network (DCN) bezeichnet und der stattfindende Abstimmungsprozess wird als DCN-Prozess bezeichnet.

Die Erfindung beruht dabei auf der Nutzung eines oder mehrerer Prinzipien aus den als Blockchain bezeichneten Verfahren. Bei dem Blockchain Verfahren wird eine verteilte Datenbank, das sogenannte Distributed Ledger (DL) genutzt. Das Distributed Ledger beinhaltet dabei als Listenelemente so genannte Facts und wird gleichzeitig auf allen an dem Verfahren teilnehmenden mehreren Mitgliedern eines öffentlichen oder privaten Netzwerkes, vorzugweise eines peer-to-peer Netzwerks, geführt.

Die einzelnen Mitglieder des Netzwerks können anonym sein und werden als Knoten bezeichnet. Für die Kommunikation im Netzwerk können die Vorteile der Kryptographie genutzt werden, um Sender und Empfänger im Netzwerk eindeutig zu identifizieren und so die Verbindungssicherheit zu erhöhen.

Sobald ein Knoten einen Fact zu dem DL hinzufügen möchte, wird zwischen den Mitgliedern des Netzwerks ein Konsens ausgehandelt, in dem bestimmt wird, ob der vorgeschlagene Fact und/oder eine Gruppe von Facts in das DL aufgenommen wird. Die durch den Konsens validierte Gruppe an Facts wird als Block bezeichnet. Mehrere hintereinander gefügte Blöcke im DL bilden die namensgebende Blockchain. Ein Block enthält dabei eine Information, vorzugsweise einen Hash-Wert, über einen früheren Block, vorzugsweise den jeweils letzten Block der Blockchain, wodurch die Sicherheit und Unveränderbarkeit der Blockchain erreicht werden kann. In allen nachfolgenden Ausführungsformen der Erfindung ist innerhalb eines DCN jeder Knoten mit allen anderen Knoten verbunden. Die Verbindung kann direkt, d.h. peer-to-peer, oder über eine zentrale Stelle, d.h. hierarchisch, erfolgen.

Das Blockchain Verfahren ist dem Fachmann hinreichend bekannt, und es existiert eine Reihe von Begriffen, die der Fachmann in diesem Zusammenhang mit einer besonderen Bedeutung belegt hat. Die folgende Beschreibung der Erfindung wird diese Begriffe aufgreifen und, sofern nicht anders ausgeführt, umfassen diese Begriffe die dem Fachmann geläufigen Ausführungsformen und Merkmale.

Ein Fact kann dabei ganz unterschiedliche Bedeutungen haben. Bekannte Beispiele sind z.B. Verfahren zur Verwaltung und Verifizierung von digitalen Inhalten und Dokumenten, Verfahren zur Authentifizierung und Autorisierung, Verfahren zur Verwaltung digitaler Identitäten, und das sehr bekannte Verfahren der Tansaktionen, auf dem die digitale Währung Bitcoin beruht. Weitere Anwendungen finden sich im Bereich der Netzwerkinfrastruktur und der Softwareentwicklung.

Ein Fact kann insbesondere auch ein Programmbestandteil sein, der eine eigene API und/oder eine eigene Datenbank beinhaltet, im Folgenden werden solche Programmbestandteile als Smart Contracts oder Chaincode bezeichnet. Smart Contracts umfassen insbesondere vorprogrammierte Bedingungen, die über das DL an alle Knoten verteilt werden.

Smart Contracts können beispielsweise eine Grundlage bilden, um so genannte decentralized Applications (DApps) zu programmieren und/oder zu verteilen. Smart Contracts können APIs bereitstellen, vorzugsweise geschützte APIs.

Als erfindungsgemäß wird beansprucht ein Verfahren zur Abstimmung mindestens einer Bewegung von mindestens zwei autonomen Vorrichtungen nach Anspruch 1.

Für das erfindungsgemäße System und Verfahren ist das Aushandeln eines Konsens für ein zukünftiges Zeitintervall von besonderer Bedeutung. An der Aushandlung sind in der Regel mehrere Knoten beteiligt. Für die Aushandlung wird ein sogenannter Konsens-Algorithmus verwendet. Dieser Algorithmus wird auf allen beteiligten Knoten ausgeführt. Dem Fachmann sind mehrere Konsens-Algorithmen bekannt, die unterschiedliche Anforderungen erfüllen, und jeweils auf spezifische Problemstellungen angepasst werden können.

Erfindungsgemäß wird der Konsens-Algorithmus zusammen auf allen beteiligten Knoten ausgeführt. Mit anderen Worten im Konsens-Algorithmus findet eine Abstimmung über den nächsten Fact zwischen den einzelnen Knoten statt.

Das geplante Zeitintervall wird dynamisch an die Situation angepasst. Die Dauer und der Zeitpunkt, an dem das geplante Zeitintervall beginnt, sind Teil des ausgehandelten Konsenses.

Die oben genannten Programmabläufe können in einigen Ausführungsformen einfachste vorbestimmte Überprüfungen von Bedingungen umfassen. Alternativ oder ergänzend sind auch komplexere Interaktionen mit der Hard-/Software des IOT Gerätes möglich. Weiter können alternativ oder ergänzend die Programmabläufe in einigen Ausführungsformen auch mit den oben genannten Smart Contracts interagieren.

In einer Ausführungsform wird in dem Schritt ii) ergänzend ein Abgleich mit Sensordaten durchgeführt, die von einer mit der Vorrichtung verbundenen Sensoreinrichtung gewonnen wurden. Die Bewertung beruht dann auf einer Auswertung der empfangenen Informationen und der eigenen Sensordaten.

Die Sensoreinheit ist bevorzugt eine der folgenden Sensoreinheiten: eine optische Sensoreinheit, eine Radarsensoreinheit, einer Lichtsensoreinheit, und/oder eine Ultraschallsensoreinheit. Weiter alternativ oder ergänzend beruht das Gewinnen von Sensordaten auf der Auswertung von anderen Datenquellen, vorzugsweise einer Cooperative Awareness Message, ETSI ITS CAM, einer Decentralized Environmental Notification Messages, ETSI ITS DENM, und/oder Informationen empfangen über ein Fahrzeugherstellerbackend und/oder Informationen aus dem Internet.

In einem weiteren Aspekt der Erfindung beinhalten die Informationen zur Planung der Bewegungen im geplanten Zeitintervall mindestens Informationen über eine eindeutige Identifikation der Vorrichtung, eine aktuelle Position, eine aktuelle Geschwindigkeit, und eine geplante Bewegung.

In einem weiteren Aspekt der Erfindung enthält die Informationen zur Planung der Bewegungen im geplanten Zeitintervall eine Information über eine Priorität der ersten Vorrichtung, vorzugsweise gegenüber den anderen Vorrichtungen.

In einer Ausführungsform der Erfindung enthält die Informationen zur Planung der Bewegungen im geplanten Zeitintervall eine Information über eine relative oder absolute Priorität der ersten Vorrichtung gegenüber den anderen Vorrichtungen.

In einem weiteren Aspekt der Erfindung sind die DCN-Knoten in den Vorrichtungen dazu konfiguriert, an mindestens einem gemeinsamen DCN-Prozess teilzunehmen, wenn sie sich in einem vorbestimmten gemeinsamen räumlichen Bereich befinden.

In einem weiteren Aspekt der Erfindung ist mindestens ein weiterer Knoten im DCN enthalten, wobei der weitere Knoten ein Master-Knoten ist.

Insbesondere sind solche Konsens-Algorithmen bekannt, in denen einige Knoten eine besondere Wichtigkeit haben und im Rahmen der Aushandlung eine größere oder gar eine bestimmende Rolle einnehmen können und andere Knoten weniger relevant oder gar unbedeutend sind. Die Knoten mit besonderer Wichtigkeit werden als Master-Knoten bezeichnet.

In einem weiteren Aspekt der Erfindung bestimmt der Master-Knoten die räumliche Ausdehnung des vorbestimmten gemeinsamen räumlichen Bereichs, und/oder der Master-Knoten bestimmt welche DCN-Knoten sich innerhalb des vorbestimmten gemeinsamen räumlichen Bereichs befinden und/oder an dem DCN-Prozess teilnehmen.

In einem weiteren Aspekt der Erfindung ist der Master-Knoten dazu konfiguriert, das DL zu archivieren und den DCN-Prozess auszuwerten.

In einer Ausführungsform der Erfindung ist der Master-Knoten dazu konfiguriert, sicherheitsrelevante Funktionen und/oder Managementfunktionen im DCN durchzuführen. Hierzu gehören insbesondere die Verwaltung und/oder die Aktualisierung von Verschlüsselungsmechanismen, von Identifikationsmechanismen und/oder eine Detailkonfiguration des Konsens-Algorithmus, sowie eine Verteilung dieser Informationen im DCN. Alternativ oder ergänzend kann der Master-Knoten dazu konfiguriert sein, DCN-Netzinformationen, (Mobilfunk-) Netzwerkinformationen und/oder Details zu anderen DCN-Knoten zu verwalten. Bevorzugt ist weiter, dass der Master-Knoten konfiguriert ist, die Details zur genauen Positionierung und/oder Details zur zeitlichen Abstimmung der DCN Knoten im DCN zu verwalten.

In einer Ausführungsform der Erfindung sind DCN-Knoten und Master-Knoten hierarchisch in einer Baumstruktur organisiert. Auch mehrere DCN können in einer solchen Struktur vernetzt sein. Aus dieser Organisation ergibt sich, dass in einzelnen DCNs nur wenige Abstimmungen notwendig sind, und in der Struktur höher liegende DCNs oder Master-Knoten die Ergebnisse der unterliegenden DCNs weiterverwenden können. Durch die Nutzung der Baumstruktur (Merkle Tree / Graphen) wird die Komplexität reduziert, da nur jeweils relevante Bereiche betrachtet werden, das führt zu einem Performancegewinn.

In einem weiteren Aspekt der Erfindung ist der Master-Knoten dazu konfiguriert, neue Programmabläufe an die DCN-Knoten im DCN zu verteilen, und die DCN-Knoten sind dazu konfiguriert, neue Programabläufe von dem Master-Knoten zu empfangen.

In einem weiteren Aspekt der Erfindung ist mindestens ein DCN-Knoten, vorzugweise ein Master-Knoten dazu konfiguriert, ein entscheidungstragender Knoten zu sein, und in der Abstimmung im Schritt d) eine Entscheidung über die Bewegungen der Vorrichtungen in dem geplanten Zeitintervall herbeiführen zu können und/oder mindestens ein DCN-Knoten, vorzugweise ein Master-Knoten ist dazu konfiguriert, ein entscheidungstragender Knoten zu sein, und das Zeitfenster für den nächsten Bewegungsblock festlegen zu können.

In einer Ausführungsform der Erfindung ist der Master-Knoten an einer Infrastrukturkomponente des Straßen-, Schienen-, Zug-, Schiffs- oder Flugverkehrs ausgebildet, vorzugsweise in einem Edge Computer.

In einem weiteren Aspekt der Erfindung ist der Master-Knoten in einem Mobile Edge Computing (MEC) Server ausgebildet, der vorzugweise an einer Mobilfunk Basisstation bereit gestellt ist, und/oder die eine der autonomen Vorrichtungen ist ein Teilnehmer im Straßen-, Schienen-, Flug-, Schiffsverkehr, oder ein sonstiger Roboter und/oder die andere der autonomen Vorrichtungen ist eine Vorrichtung zur Koordinierung des Straßen-, Schienen-, Zug-, Schiffs- oder Flugverkehrs, oder sonstiger Roboter. In diesem Fall können die oben genannten Managementfunktionen in die Mobilfunkinfrastruktur und ein Backend integriert werden.

In einem weiteren Aspekt der Erfindung wird das DCN unter Nutzung einer Netzwerktechnologie gebildet, die eine vorbestimmte Verfügbarkeit, eine vorbestimmte Latenz, und/oder einen vorbestimmten Datendurchsatz hat; und/oder das DCN wird unter Nutzung von mindestens einer der folgenden Netzwerktechnologien gebildet: Mobilfunk-Datenverbindung, WiFi-Datenverbindung, Bluetooth-Datenverbindung, und/oder optische Datenverbindung.

Erfindungsgemäß wird das Blockchain Prinzip auf die Koordinierung von autonomen IOT Geräten angewendet. Dabei wird das jeweilig geplante Verhalten ausgetauscht und abgestimmt wobei standardisiert ein Konsens-Algorithmus auf den autonomen IOT Geräten ausgeführt wird. Durch den ausgehandelten Konsens wird das tatsächliche zukünftige Verhalten der autonomen IOT Geräte bestimmt. Die autonomen IOT Geräte bewerten die vorliegende Situation selbstständig, jeweils für sich, und tauschen sich mit anderen autonomen IOT Geräten über einen möglichen Konsens aus. Auf diese Weise werden wesentliche Aufgaben der Koordinierung dezentral gelöst: Kollisionskontrolle, autonome Bewegung und eine Verkehrsflusskontrolle.

Eine Ausführungsform der Erfindung betrifft die Koordination des Straßenverkehrs. In dieser Ausführungsform sind die Knoten in verschiedenen Fahrzeugen und/oder an Verkehrsinfrastrukturelementen, insbesondere an Verkehrslenkungseinrichtungen, Baustellen, Beschilderungen, Ampeln, Signalelementen, Wi-Fi-Hotspots, Multifunktionsgehäusen, IOT Gateways (Sigfox, Lora), Haltestellen, und/oder an Außenwerbungs-Elementen im Straßenraum, bereitgestellt. Die verschiedenen Fahrzeuge werden als ein autonomes IOT Gerät im Sinne der Erfindung behandelt. Als Konsens wird jeweils eine Durchführung mehrerer Bewegungen der mehreren autonomen IOT Geräte ausgehandelt. Dieser Konsens wird dann in das DL aufgenommen, und anschließend von den Fahrzeugen ausgeführt. Anschließend oder gleichzeitig findet die Abstimmung über mindestens einen weiteren Konsens statt, der vorzugsweise ein nachfolgendes Zeitintervall betrifft.

Die Zeitintervalle, für die ein Konsens ausgehandelt wird, sind dynamisch angepasst. In einer bevorzugten Ausführungsform werden die Zeitintervalle für einen Konsens dynamisch an die Verkehrssituation angepasst. Während bei geringem Verkehrsaufkommen relativ lange Zeitintervalle von einigen Sekunden ausgehandelt werden können, müssen bei einer unmittelbar bevorstehenden Kollision, bei hohem Verkehrsaufkommen und/oder sehr hohen Geschwindigkeiten Zeitintervalle von einigen Millisekunden ausgehandelt werden.

Das erfindungsgemäße Verfahren und System ist jedoch nicht nur auf den Einsatz im automobilen Umfeld begrenzt, sondern kann allgemein auch auf andere Anwendungsfälle zur Koordinierung von selbstorganisierenden Systemen angewendet werden.

Insbesondere ist eine Verwendung auf Flugplätzen zur Anflugsteuerung, zur Flugverkehrskontrolle, einschließlich einer Drohnensteuerung, zur Steuerung ungetakteten Weichen auf Schienenverkehrsinfrastrukturelementen, sowie zur Durchführung autonomer Ausweichmanöver in der Raumfahrt und/oder der Schifffahrt auf oder unter Wasser möglich. Das erfindungsgemäße Verfahren kann dabei so ausgeführt werden, dass die Vorgaben aus der der ISO Norm 26262 zur funktionalen Sicherheit umgesetzt werden.

In einer Ausführungsfonn der Erfindung ist die Priorität global festgelegt. Insbesondere kann über die Priorität der Vorrang bestimmter Vorrichtungen gegenüber anderen Vorrichtungen geregelt sein.

Der gemeinsame räumliche Bereich eines DCN kann sich in einigen Ausführungsformen mit den räumlichen Bereichen anderer DCNs überlappen, insbesondere ist auch der Fall möglich, dass das räumlich Gebiet eines DCN innerhalb eines räumlichen Gebiets eines anderen DCN liegt.

Eine weitere Ausführungsform betrifft die Koordinierung eines bodennahen Drohnenverkehrs. Eine weitere Ausführungsform betrifft die Koordinierung von Abläufen in Bahnhöfen, also die Koordinierung von Schienenverkehr im Bereich selbständig agierender Weichenanlagen. Eine weitere Ausführungsform betrifft die Koordinierung von Flugverkehr, insbesondere die Koordinierung von an und abfliegen Flugobjekten im Luftraum von Flughäfen. Eine weitere Ausführungsform betrifft die Koordinierung von Abläufen in Häfen, insbesondere die Koordinierung des ein- und auslaufenden Schriftverkehrs und des Schriftverkehrs innerhalb der Hafenanlagen. Eine weitere Ausführungsform betrifft die Koordinierung von selbstständig agierenden Maschinen in Lagerhallen, Fabriken oder Haushalten, insbesondere die Koordinierung autonomer Industrieroboter.

In der Ausführungsform für den Straßenverkehr werden als autonome IOT Geräte unter anderem PKWs, LKWs, Motorräder, elektrische Fahrräder, Segways, und/ oder Rollstühle bezeichnet. Als räumlich zusammenhängender Abschnitte werden Kreuzungen, Autobahnen, Landstraßen und ungeregelte Zonen bezeichnet. Generell kann der gesamte Verkehr in einer Stadt, eine Region oder einem ganzen Land mit dem erfindungsgemäßen Verfahren koordiniert werden.

Sofern die Koordinierung komplett auf DCN-Netzwerken beruht, sind weder Beschilderung noch Verkehrslenkungseinrichtungen nötig, da sich alle Verkehrsteilnehmer jederzeit selbstständig und automatisiert miteinander abstimmen.

In einer Ausführungsform der Erfindung werden die unveränderbaren Blöcke in den Knoten für eine Implementierung einer Funktionalität einer Black Box für autonome IOT-Geräte genutzt. Diese Black Box kann das das Verhalten der autonomen IOT-Geräte und/oder andere Informationen für Audits nachweisen. In Ausführungsformen, in denen der der Speicherplatz in den Knoten begrenzt ist, kann der älteste Block wieder überschrieben werden und/oder die Daten in einem Backend bzw. in der Cloud gespeichert werden. Durch die Verknüpfung der Blöcke bleibt eine Konsistenz gewährleistet.

Weiterhin wird als erfindungsgemäß beansprucht eine Vorrichtung zur Abstimmung einer Bewegung von mindestens zwei autonomen Vorrichtungen nach Anspruch 12.

Weiterhin wird als erfindungsgemäß beansprucht ein System zur Abstimmung einer Bewegung von mindestens zwei autonomen Vorrichtungen in Bezug zueinander in einem geplanten Zeitintervall, wobei das System mindestens zwei der voranstehenden Vorrichtungen aufweist, die über Backend verbunden sind, und das Backend dazu konfiguriert ist, ein lokales, regionales, nationales und/oder internationales DCN-Netzwerk zu bilden.

In einem weiteren Aspekt der Erfindung ist das Backend dazu konfiguriert, die Master-Knoten zu überwachen, und/oder zu verwalten; und insbesondere dazu konfiguriert ist, Programablaufkomponenten in den Master-Knoten zu löschen, hinzuzufügen und/oder auszutauschen.

Das erfindungsgemäße System kann auf Basis der Mobilfunk Technologie und dem Mobile Edge Computing umgesetzt werden. Bereits heute sind autonome IOT Geräte meistens über eine Telekommunikationsverbindung, basierend auf einer SIM-Karte, mit einer Basisstation verbunden. Zusätzlich kann ein dediziertes Netzwerk Slice (dedizierte Netzwerkressourcen) verwendet werden. Erfindungsgemäß kann ein Mobile Edge Computing Server dazu verwendet werden dynamisch DCNs zu erzeugen und die Steuerung bestimmter Abstimmungsgruppen von IOT Geräten zu übernehmen. Weiter wird ein DCN mit einem DL zur Kontrolle, Konsensfindung und Archivierung eines Verkehrsflusses verwendet.

In jedem autonomen IOT Gerät wird mindestens ein Knoten ausgeführt um an einem DCN Prozess teilzunehmen.

### Kurze Beschreibung der Abbildungen

In den Abbildungen zeigt
- Fig. 1: eine schematische Darstellung einer Ausführungsform des erfindungsgemäßen Verfahrens,
- Fig. 2: einen Überblick über den Aufbau eines erfindungsgemäßen Systems in verschiedenen Ausführungsformen und
- Fig. 3: ein Blockdiagram für eine Ausführungsform des erfindungsgemäßen Systems.

### Detaillierte Beschreibung der Erfindung

Heutige autonome IOT Geräte verfügen teilweise bereits über die Fähigkeit an einer Blockchain teilzunehmen. IOT-Geräte sollen künftig Transaktionen über Blockchaintechnologie ausführen und validieren. Auch sind Komponenten der öffentlichen Infrastruktur bereits als IOT Geräte ausgeführt, eine Vergrößerung dieser Infrastruktur wird in absehbarer Zukunft stattfinden.

In einer Ausführungsform der Erfindung wird ein Distributed Ledger zur Koordinierung, Abstimmung und Nachverfolgung eines reibungsfreien Verkehrsflusses im Straßen-, Schienen-, Schiffs- und/oder Luftverkehr genutzt.

In einer Ausführungsform der Erfindung wird eine globale Verbindung verschiedener DCNs zur Koordinierung, Abstimmung und Nachverfolgung eines reibungsfreien Verkehrsflusses im Straßen-, Schienen-, Schiffs- und/oder Luftverkehr genutzt.

In Ausführungsformen, die den Straßenverkehr betreffen, werden als autonome IOT Geräte alle am Straßenverkehr teilnehmenden (kommunikationsfähigen) Objekte, vorzugsweise Fahrzeuge, betrachtet. Als räumlich zusammenhängender Abschnitte werden Kreuzungen, Autobahnen, Landstraßen, sowie ungeregelte Zonen bezeichnet. An dem DCN nehmen vorzugsweise auch nicht mobile autonome IOT Geräte teil. Diese nicht mobilen IOT Geräte umfassen Verkehrslenkungseinrichtungen, Verkehrsschilder, Baustellen, Hindernisse, oder allgemein Verkehrsinfrastrukturelemente. In diesen Ausführungsformen regelt die Priorität den Vorrang von Rettungsfahrzeugen oder Straßenbahnen und Bussen. Ferner kann die Priorität dynamisch verändert werden. Eine Abhängigkeit der Prioritätsreglungen von Wochentag und Uhrzeit ist möglich.

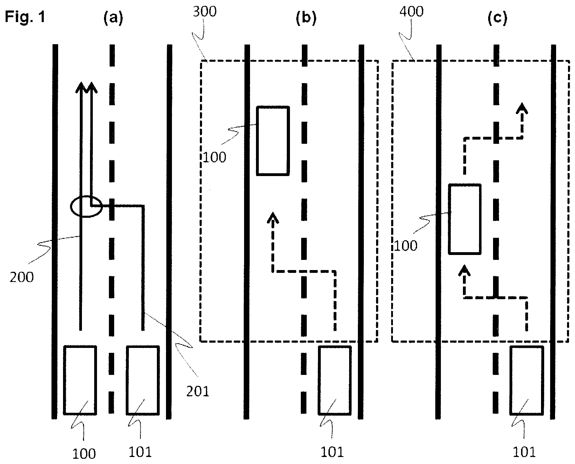

In Figur 1 ist das erfindungsgemäße Verfahren in einer Ausführungsform schematisch dargestellt. Folgende Situation veranschaulicht den Ablauf einer Koordinierung zwischen zwei Fahrzeugen unter Nutzung des erfindungsgemäßen Verfahrens.

In einem räumlichen Bereich, vorzugsweise in einem zweispurigen Autobahnabschnitts, befinden sich zwei Fahrzeuge 100, 101. Das erste Fahrzeug 100 befindet sich auf der linken Fahrspur und hat die Absicht 200 zu beschleunigen. Das zweite Fahrzeug 101 befindet sich auf der rechten Fahrspur und hat die Absicht 201 auf die linke Fahrspur zu wechseln. Folglich besteht ein Risiko eines Zusammenstoßes.

Erfindungsgemäß bilden beide Fahrzeuge 100, 101 ein DCN. Beide Fahrzeuge schlagen ihre jeweilige Handlung 200, 201 als Fact vor. Im DCN findet eine Abstimmung der Facts für das nächste Zeitintervall statt. Nach einer oder mehreren Abstimmungsrunden (a), (b), (c) wird ein Konsens 300, 400 erreicht. Dieser Konsens 300, 400, d.h. insbesondere die enthaltenen Facts werden als verbindliche Handlungsanweisung für beide Fahrzeuge 100, 101 angesehen und als Block in das DL aufgenommen. Ein Unfall ist vermieden.

In dem geschilderten Beispiel könnte ein erster Konsens 300 lauten: Das erste Fahrzeug 100 beschleunigt und passiert das zweite Fahrzeug 101, bevor das zweite Fahrzeug 101 auf die linke Fahrspur wechselt. Alternativ könnte ein zweiter Konsens 400 lauten: Das erste Fahrzeug 100 wechselt auf die rechte Fahrspur und beschleunigt dort, während das zweite Fahrzeug 101 auf die linke Fahrspur wechselt.

In einer Ausführungsform der Erfindung werden innerhalb einer Konsens-Findung die Bewegungen in mehreren aufeinanderfolgenden zeitlichen Intervallen abgestimmt. Alternativ oder ergänzend können mehrere Konsens-Findungen parallel durchgeführt werden.

Der genaue Inhalt des Konsens hängt von dem verwendeten Konsens-Algorithmus und den verwendeten Programmabläufen ab. Der ausgehandelte Konsens, also entweder 300 oder 400, wird in die Blockchain (das DL) des lokalen DCN aufgenommen. Zu jedem Zeitpunkt ist beiden Fahrzeugen die Handlungsabsicht des jeweils anderen bekannt, somit ist zu jedem Zeitpunkt sichergestellt, dass kein Unfall passieren wird.

Der Fachmann erkennt die wesentlichen Vorteile die sich aus der Verwendung des Distributed Ledger Prinzips ergeben. Es handelt sich um ein dezentralisiertes System, so dass das Verfahren selbst dann durchgeführt werden kann, wenn einige Knoten sich nicht am Abstimmungsprozess beteiligen, oder beteiligen können. Diese Knoten und deren geplante Handlungen werden vorzugsweise dennoch in die Konsensfindung mit einbezogen und stellen kein Problem (sondern eher einen Vorteil) für die Abstimmung des Verhaltens der anderen Knoten dar.

Das DL ist jederzeit nachvollziehbar und lokal in jedem Knoten gespeichert, somit bietet sich jederzeit die Möglichkeit Informationen über in dem Zeitintervall geplante, aktuelle und/oder vergangene Handlungen eines Knotens abzurufen. Das Verfahren kann durchgeführt werden ohne dass dabei ein übermäßiges Vertrauen in das fehlerfreie Arbeiten eines einzelnen Knotens nötig ist, da prinzipiell eine Mehrheit an Knoten an der Konsensfindung beteiligt sind.

In einer bevorzugten Ausführungsform wird eine Public Key Infrastruktur (PKI) verwendet, um eine sichere Kommunikation zwischen den einzelnen Netzwerknoten zu erlauben.

In einer Ausführungsform der Erfindung ist entsprechend des Konsens-Algorithmus und der Informationsverteilung im DCN der globale Zustand des DCN konsistent und bleibt erhalten.

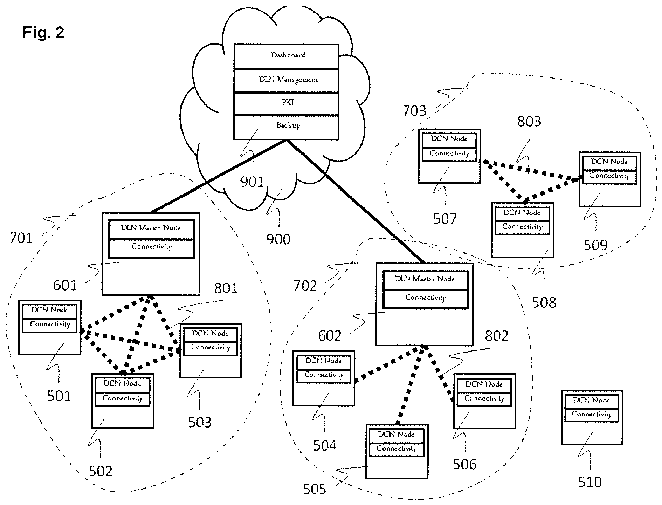

Figur 2 zeigt einen Überblick über den Aufbau eines erfindungsgemäßen Systems in verschiedenen Ausführungsformen.

In dem erfindungsgemäßen System sind die autonomen IOT Geräte 501 bis 510 jeweils mit mindestens einem DCN Knoten ausgebildet, der an einem DCN Verfahren teilnimmt. Als so genannte Facts werden die Bewegungen der einzelnen Knoten in dem nächsten Zeitintervall behandelt. Die einzelnen Knoten teilen einem DCN 801, 802, 803 jeweils ihre geplante Bewegung und weitere Informationen mit.

In einer Ausführungsform teilen die einzelnen Knoten den jeweils anderen Knoten ihre Position, ihre Bewegungsrichtung und/oder ihre Bewegungsgeschwindigkeit mit. Alternativ oder ergänzend werden weitere Informationen wie eine Priorität, erkannte Umgebungsobjekte oder allgemeine Informationen beispielsweise situationsabhängige Verkehrsregeln mitgeteilt. Situationsabhängige Verkehrsregeln können unter anderem Information über vorhandene Geschwindigkeitsbegrenzungen umfassen.

Erfindungsgemäß evaluiert jeder Knoten für sich jeweils alle und/oder nur die für ihn relevanten Facts der anderen Knoten, wozu ein Programmablauf ausgeführt wird. In einem Abstimmungsprozess wird ein Block vorgeschlagen. Alle Knoten können den vorgeschlagenen Block lesen und für oder gegen diesen Block abstimmen. Abhängig von der Situation können mehrere Abstimmungsrunden nötig sein, bis ein Konsens ausgehandelt wurde. Alternativ können nur bestimmte Knoten, vorzugsweise Master-Knoten, den vorgeschlagenen Block lesen und für oder gegen diesen Block abstimmen. Abhängig von der Situation können mehrere Abstimmungsrunden nötig sein, bis ein Konsens ausgehandelt wurde.

Im Allgemeinen ist ein Abstimmungsprozess jedoch oft zeitkritisch. Dieses Problem wird durch Ausführungsformen gelöst, die einen Master-Knoten 601, 602 verwenden. In diesen Ausführungsformen können nur Master-Knoten 601, 602 einen Block vorschlagen, und an einer Abstimmung teilnehmen. Alle anderen normalen Knoten 501, 502, 503, 504, 505, 506 können lediglich die vorgeschlagenen Block lesen, jedoch nicht an der Abstimmung teilnehmen.

Alternativ wird dieses Problem wird durch Ausführungsformen gelöst, in denen bestimmte Knoten, vorzugsweise Knoten die an Infrastrukturkomponenten ausgebildet sind, eine höhere Gewichtung in der Konsens-Abstimmung haben.

Grundsätzlich sind zwei allgemeine Ausführungsformen möglich. Die erste allgemeine Ausführungsform betrifft ein Verfahren und System das ein vollständig dezentrales DCN 803 zur Koordinierung nutzt. Die zweite allgemeine Ausführungsform betrifft ein Verfahren und System, das ein DCN 801, 802 mit Unterstützung durch eine zentrale Komponente nutzt, vorzugsweise durch einen MEC-Server. Ein solches Netzwerk kann auch als teilzentralisiert bezeichnet werden. Neben einem echten peer-to-peer Netzwerk 803, ist also auch ein peer-to-peer artiges Netzwerk 801 oder ein rein hierarchisches Netzwerk 802 möglich. Der Fachmann erkennt weitere mögliche Mischformen, vorzugsweise Baum- und/oder Graphenstrukturen.

Die erste allgemeine Ausführungsform, also ein DCN ohne Kontrollinstanz 803, kann zur selbst organisierten dezentralen Koordinierung mehrerer autonomer IOT Geräte 507, 508, 509 eingesetzt werden. Spezielle Ausführungsformen betreffen die Koordinierung eines Straßenverkehrs, eines Flugverkehrs, eines Schriftverkehrs, oder die Koordinierung von Industrierobotern. In einem solchen Netzwerk koordinieren sich die einzelnen autonomen IOT Geräte selbst.

In dieser allgemeinen Ausführungsform wird die Software eines jeden einzelnen Knotens bevorzugt durch den Hersteller/Besitzer verwaltet. Dazu bietet sich eine Software Ausstattung ab Werk oder eine Softwareverwaltung über einen Remote Zugang an. In dieser Ausführungsform ist das Ausführen von Software Updates komplex und risikoanfällig. Für ein solches Update müssen alle am Verfahren teilnehmenden autonomen IOT Geräte beim Rollout vergleichbare und/oder in ihrer Funktionalität identische Software erhalten, da ansonsten eine Inkohärenz droht und die Funktionalität der Konsensbildung gefährdet ist.

Für diese allgemeine Ausführungsform ist nicht jeder Konsensalgorithmus geeignet, da alle Knoten aktiv an der Konsenswirkung mitwirken müssen. Besonders geeignet ist diese allgemeine Ausführungsform jedoch für die Koordinierung des Luftverkehrs in großen Höhen, des Schriftverkehrs auf hoher See oder unter Wasser sowie im Weltraum, da dort nur eine direkte Kommunikation zwischen den Verkehrsteilnehmern möglich ist und/oder eine indirekte Kommunikation über eine zentrale Kontrollinstanz, insbesondere eine Verwendung eines MEC-Servers ausgeschlossen ist.

Dem Fachmann ist erkenntlich, dass diese Ausführungsformen besonders robust sind, da zu jedem Zeitpunkt jedes IOT Gerät im DCN zumindest die Handlungsabsichten aller anderen autonomen IOT Geräte kennt und selbst ohne weitere Kommunikation beispielsweise im Fall eines Netzwerkausfalls, eines Time-out, oder dem Fall, dass kein Konsens erreicht werden kann, immer noch einen eigenen Lösungsvorschlag ermitteln kann, der, eine sinnvolle Programmierung des Programmablaufs vorausgesetzt, eine Kollision mit anderen autonomen IOT Geräten verhindert.

Unabhängig von der speziellen Ausführungsform des Abstimmungsprozess enthält der gefundene Konsens den bestmöglichen Block, d.h. in der Regel wird das optimale Verhalten aller Verkehrsteilnehmer für die jeweilig vorliegende Situation und das gewählte Zeitintervall gefunden. Jeder Block ist in jedem Knoten gespeichert. Erst nachdem ein Block verhandelt wurde, wird dieser ausgeführt.

Die zweite allgemeine Ausführungsform weist in dem DCN 801, 802 einen MEC-Server auf, in dem ein Master-Knoten 601, 602 ausgebildet ist. Spezielle Ausführungsformen betreffen wieder die Koordinierung eines Straßenverkehrs, eines Flugverkehrs, eines Schiffverkehrs, oder die Koordinierung von Robotern in Haushalt oder Industrie. In einem solchen Netzwerk müssen sich die einzelnen autonomen IOT Geräte nicht vollständig selbst koordinieren.

In einer speziellen Ausführungsform der Erfindung wird mindestens ein Masterknoten 601, 602 jeweils an einer MEC Einrichtung, vorzugsweise an einer Mobilfunk Basisstation bereitgestellt. Ein jeder dieser Master-Knoten 601, 602 initiiert und betreut eines oder mehrere lokale DCN Netzwerke 801, 802. Der MEC-Server übernimmt eine oder mehrere der wesentlichen Verwaltungsaufgaben im DCN 801, 802 und entlastet so die einzelnen Knoten. Unter Anderem lässt sich in dieser Ausführungsform eine Reduzierung der Hard- und Softwareanforderungen an die teilnehmenden Konten erreichen.

In speziellen Ausführungsformen kann der MEC-Server eine oder mehrere der folgenden Aufgaben lösen: Der MEC-Server kann die genannten Geobereiche 701, 702 bestimmen, d.h. räumlich begrenzte Gebiete 701, 702 verwalten, in denen ein DCN 801, 802 gebildet wird; Der MEC- Server kann die alleinige Kontrolle über die Authentifizierung und Autorisierung der Teilnehmer in einem DCN haben, diese Aufgabe kann beispielsweise über ein Zertifikatssystem und/oder über eine SIM-Kartenregistrierung in einem Mobilfunknetz gelöst sein; Der MEC Server kann weiter sicher stellen, dass der Konsensprozess innerhalb einer vorgegebenen Zeit abgeschlossen wird; Der MEC-Server kann die Ausgabe von standardisierten Smart Contracts überwachen, welche über die Blockchain an die einzelnen Knoten in jedem DCN verteilt werden; Der MEC-Server kann sicher stellen, dass die Kommunikation zwischen den einzelnen IOT Geräten stattfinden kann, dazu überwacht der MEC-Server die Verbindungen, die Verbindungsqualität sowie die Latenzzeiten; Der MEC kann die Blockchain archivieren, beispielsweise indem der MEC-Server mit einem Backend 901 verbunden ist und die Blockchain an dieses automatisiert zur Auswertung übermitteln. Das Backend 901 kann in einer Cloud 900 gehosted sein.

In einer speziellen Ausführungsform besteht die Möglichkeit einer gezielten Einflussnahme durch die MEC Einrichtung, die am Master-Knoten bereitgestellt ist. Insbesondere kann die Einhaltung gesetzlicher Vorschriften umgesetzt werden. Besonders bevorzugt ist die Umsetzung eines "Not-Aus" Knopf, d.h. als nächster Block wird das Stoppen aller Bewegungen für bestimmte oder alle Vorrichtungen im DCN in das DL aufgenommen.

Die erste allgemeine Ausführungsform kann auch als Rückzugsebene für die zweite allgemeine Ausführungsform betrachtet werden. Sollte es dazu kommen, dass aufgrund einer Störung ein Ausfall der Kontrollinfrastruktur, d.h. der MEC- und/oder Telekommunikationsinfrastruktur, vorliegt, wird automatisch auf eine direkte Abstimmung zwischen den Verkehrsteilnehmern umgestellt.

Figur 2 zeigt ferner ein autonomes IOT gerät 510, dass sich in keinem der Geobereiche 701, 702 oder 703 befindet und deswegen an keinem der DCN Netzwerke teilnimmt.

Dem Fachmann ist erkenntlich, dass sich weitere Mischformen aus den beiden genannten allgemeinen Ausführungsformen ableiten lassen, die für bestimmte Anwendungen vorteilhafte Eigenschaften haben.

Im allgemeinen Blockchain Verfahren ist die Bearbeitungsgeschwindigkeit des Konsensalgorithmus durch den langsamsten am Konsens-Algorithmus teilnehmenden Knoten begrenzt. Aus diesem Grund dürfen nur Knoten zu dem Verfahren zugelassen werden, die über bestimmte Minimalanforderungen verfügen. Ebenfalls stellt das Verfahren bestimmte Minimalanforderungen an die verwendete(n) Netzwerkverbindung(en).

In einigen Situationen ist es nötig, dass das Zeitintervall für den nächsten Block sehr kurz ist, beispielsweise zur Abwendung unmittelbar bevorstehende Kollisionen. In anderen Situationen sind sehr lange Zeitintervalle möglich, beispielsweise für das Befahren eines längeren Autobahnabschnitts. Auch die zur Verfügung stehende Netzwerktechnologie bestimmt, welche der voranstehend genannten Ausführungsformen besonders vorteilhaft ist. Im Fall eines bevorstehenden Unfalls muss in sehr kurzer Zeit ein Konsens ausgehandelt werden. Daher muss die Zahl der abstimmenden Knoten begrenzt sein. Da sich die Situation sehr schnell dynamisch verändert, darf das Zeitintervall nur sehr kurz sein. Weiter sollte die Netzwerkverbindung eine hohe Bandbreite haben und sehr zuverlässig sein. Auf der anderen Seite kann die Netzwerkverbindung eine begrenzte Reichweite haben, da ohnehin nur innerhalb eines sehr begrenzten räumlichen Bereichs ein Konsens ausgehandelt werden muss.

Ausführungsformen des erfindungsgemäßen Systems sind durch eine Kombination aus einem Distributed Ledger, einer Mobile Edge Computing Einrichtung und Elementen der 5G Infrastruktur gebildet. In einer Ausführungsform sind mehrere autonome IOT Geräte in einer Funkzelle auf Basis einer SIM Kartenregistrierung in einem Mobilfunknetz miteinander verbunden.

In einer Ausführungsform nutzen die autonomen IOT Geräte sowohl Mobilfunktechnologien als auch weitere Datenverbindungen, bevorzugt direkte, schnelle und/oder kurzreichweitige Datenverbindungen, um mit den Geräten im DCN zu kommunizieren. Verschiedene Datenverbindungen können gleichzeitig genutzt werden. Es ist vorteilhaft, wenn Latenz, Reichweite und Bandbreite an die Situation angepasst optimiert werden.

Während sich für bestimmte Abstimmungsprozesse für längere Zeitintervalle die Kommunikation über eine langsame Mobilfunktechnologie anbietet, ist bei anderen Abstimmungsprozessen die Verwendung einer sehr breitbandigen, beispielsweise einer WiFi Direktverbindung, von Vorteil, da bei diesen zwar die Reichweite begrenzt ist, jedoch dafür eine hohe Bandbreite zur Verfügung steht.

In einer Ausführungsform stellt das Backend bestimmte Managementfunktionen für die DCNs zur Verfügung. Alternativ oder ergänzend stellt das Backend die Managementfunktionen in Zusammenwirkung mit den Master-Knoten bereit.

Hierzu gehören insbesondere die Verwaltung und/oder die Aktualisierung von Verschlüsselungsmechanismen, von Identifikationsmechanismen und/oder eine Detailkonfiguration des Konsens-Algorithmus, sowie eine Verteilung dieser Informationen im DCN. Alternativ oder ergänzend kann der Master-Knoten dazu konfiguriert sein, DCN-Netzinformationen, (Mobilfunk-) Netzwerkinformationen und/oder Details zu anderen DCN-Knoten zu verwalten. Bevorzugt ist weiter, dass der Master-Knoten konfiguriert ist, die Details zur genauen Positionierung und/oder Details zur zeitlichen Orientierung der DCN Knoten im DCN zu verwalten.

Ferner kann das Backend eine Langzeitsicherung der einzelnen DLs bereitstellen. Alternativ oder ergänzend kann das Backend OEM/IT Schnittstellen zur Verfügung stellen.

Eine weitere allgemeine Ausführungsform der Erfindung ergibt sich aus der Speicherung des DL. In dieser Ausführungsform ist mindestens ein DCN zumindest zeitweise mit einem Backend verbunden und stellt dem Backend das DL aus dem DCN zur Verfügung.

Das Backend kann Auswertungen übernehmen. Vorteilhaft ist insbesondere die Möglichkeit eines koordinierten Vertriebs der Daten in Rohdatenform oder in einem ausgewerteten Zustand. Vorteilhaft ist weiter die Datenauswertung mit Big-Data-Algorithmen oder Machine-Learning-Algorithmen. Die Daten können in Hinblick auf eine überregionale Verkehrskontrolle und/oder Verkehrslenkung ausgewertet werden. Die Daten können auch zur Verbesserung einer Programmierung der autonomen IOT Geräte verwendet werden. Entsprechend der jeweiligen Auswertungsziele kann das Backend bestimmte Daten gefiltert zur Verfügung stellen. Beispielsweise ist für die Verkehrsflussoptimierung eine Reduzierung der Daten auf Position und Navigationsziele der IOT Geräte möglich.

Eine weitere Ausführungsform der Erfindung erweitert die Koordinierung der Bewegung um Informationen über ein Navigationsziel. Dem Fachmann ist ersichtlich, dass sich dadurch, und speziell in Verbindung mit den Abstimmungen in anderen DCNs, eine globale Verkehrsflusskontrolle und -Optimierung verwirklichen lässt.

Dem Fachmann ist jedoch erkenntlich, dass bestimmte Prinzipien und Merkmale üblicher Blockchain-Prozesse nicht optimal für die Verwendung in den genannten Ausführungsbeispielen geeignet sind. Abhängig von der verwendeten Technologie muss jeweils die komplette Blockchain in jedem Knoten gespeichert sein und jeder dem DCN neu hinzugefügte Knoten muss die bisherige Blockchain laden. Um das erfindungsgemäße DCN zu bilden, müssen mobile Knoten die einzelne Blockchain jedoch nur solange wie unbedingt notwendig und/oder gesetzlich vorgeschrieben speichern. Neue Blöcke können hinzugefügt werden, ohne dass diese notwendigerweise einen vorausgehenden Block besitzen müssen. Mit anderen Worten die Knoten müssen nicht die gesamte vorherige Blockchain laden. Insbesondere bei Ausführungsformen mit MEC-Server kann die Blockchain auch zentral im MEC-Server verwaltet werden, die teilnehmenden Knoten müssen dann nur jeweils einige wenige Blöcke laden.

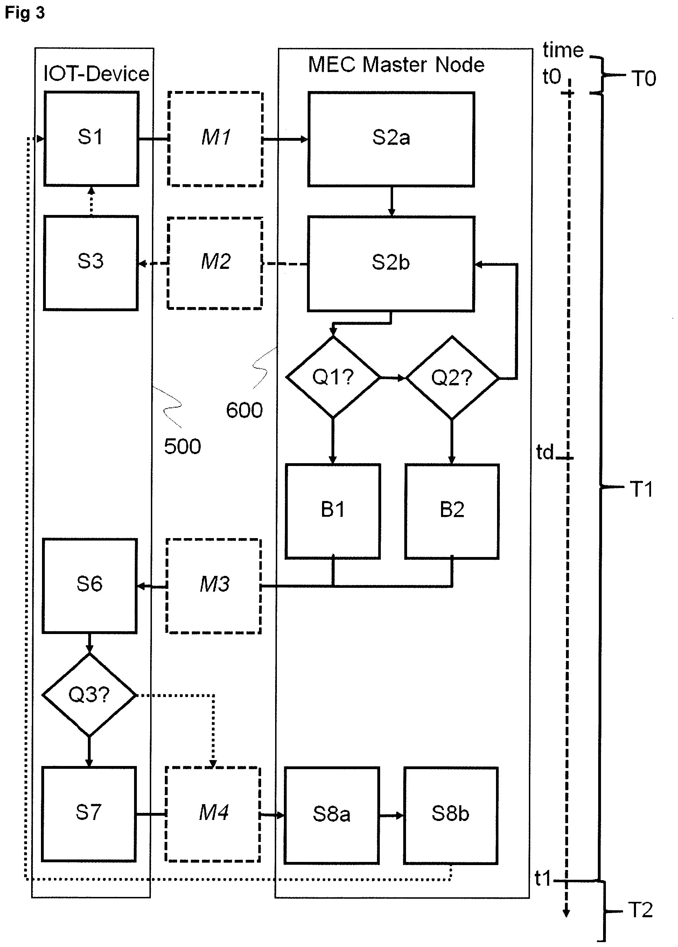

Figur 3 zeigt ein Blockdiagram einer Ausführungsform der Erfindung. Ein Planungsintervall T1 beginnt zur Zeit t₀ mit einem neuen Planungsschritt S1. Das IOT Gerät 500 sendet eine Nachricht M1 an den MEC Masterknoten 600.

Die Nachricht M1 enthält mindestens Informationen über die geplanten Facts der teilnehmenden IOT Geräte für ein kommendes Intervall T2. Die Informationen beinhalten vorzugsweise mindestens eine Positionsangabe, eine Bewegungsrichtung und eine Geschwindigkeit. Im Weiteren sind in der Nachricht M1 bevorzugt Abschätzungen über Positionen naher Objekte/Knoten enthalten. Im Weiteren sind in der Nachricht M1 vorzugsweise Programmausführungergebnisse und Synchronisationsdaten enthalten.

In einer Ausführungsform wird durch gegenseitige Erkennung die Richtigkeit/Vertrauenswürdigkeit der übermittelten Facts der jeweils anderen Vorrichtungen überprüft. Wenn eine Vorrichtung übermittelt, dass sie sich an einer Position x befindet, die jeweils anderen Vorrichtungen die eine Vorrichtung jedoch mehrheitlich an einer anderen Position y erkannt haben, so kann den übermittelten Facts der einen Vorrichtung nicht vertraut werden und die Facts werden entsprechend behandelt, vorzugsweise von werden die Facts von der Konsenzabstimmung ausgeschlossen. Auf diese Weise können auch Hackerangriffe (Falschdaten) abgewehrt werden.

Im Schritt S2, der aus den Schritten Sammlung S2a und Berechnung S2b besteht werden folgende Operationen durchgeführt: Warten bis zur maximalen Verzögerungszeit t_{d} und während des Wartens sammeln von so vielen Nachrichten einzelner teilnehmender Knoten wie möglich.

Die Zeit t_{d} bestimmt sich aus der Größe des aktuellen Zeitintervalls T1 unter Bezugnahme der Latenzzeit des langsamsten Knotens oder aus der Zeit bis zum Beginn des zu planenden Intervalls falls dieses nicht das folgende sondern ein weiter in der Zukunft liegendes ist. Es muss sichergestellt werden, dass alle nachfolgende Schritte nach S2b ausgeführt werden können, bevor das aktuelle Zeitintervall beendet ist bzw. das zu planende Intervall beginnt.

Im Schritt 2b berechnet der Masterknoten einen kollisionsfreien Block durch addieren und vergleichen der Bewegungsvektoren in Bezug auf die Zeit. Während der Wartezeit bis t_{d} wird optional eine Nachricht M2 mit jenen Knoten ausgetauscht, von denen bereits eine Nachricht M1 empfangen wurde und welche für die aktuelle Abstimmungsrunde noch rechtzeitig vor t_{d} antworten werden.

In jenen Knoten wird die Programmausführung S3 durchgeführt. In der Programmausführung S3 werden bevorstehende Bewegungsvektoren für mindestens das nächste Zeitintervall T2 mit eigenen Sensorinformationen verglichen. Wird eine bevorstehende Kollisionen festgestellt, werden bevorzugt die eigenen Facts angepasst, und Schritt S1 wiederholt wobei eine neue Nachricht M1 mit den angepassten eigenen Facts übermittelt wird.

Sollte keine Kollision festgestellt werden, wird lediglich eine Bestätigung weitergegeben und Schritt S1 wiederholt.

Durch die mehrfache Ausführung der Schritte S1-S3 auf möglichst vielen Knoten werden schrittweise optimierte Facts mit den Knoten ausgetauscht bis die maximale Verzögerungszeit t_{d} erreicht ist.

Sobald die Zeit t_{d} erreicht ist, wird entschieden Q1 ob noch genügend Zeit zum finden eines kollisionsfreien Block vorhanden ist. Falls ja, d.h. das Ergebnis von Q1 "ja" ist, wird in Q2 entschieden ob dieser Block kollisionsfrei ist. Falls das Ergebnis von Q2 "nein" ist, wird Schritt S2b erneut ausgeführt und dabei die Facts optimiert. Falls das Ergebnis von Q2 ,ja" ist, wird dieser kollisionsfreie Block B2 für den nächsten Schritt verwendet. Falls das Ergebnis von Q1 "nein" ist, wird der vom Masterknoten berechnete Block B1für den nächsten Schritt verwendet. B1 ist mindestens ein Standardblock welche keine Instruktionen enthält, z.B. weil keine Berechnung möglich war, meist aber ein bestmögliche Sicherheitsnotlösung um Unfälle zu vermeiden.

Eine mögliche Sicherheitsnotlösung ist, dass sich alle Vorrichtungen Geräte mit stark reduzierter Geschwindigkeit in der jeweiligen Fahrtrichtung weiterbewegen und/oder sich neu abstimmen.

Der jeweilige Block B1 oder B2 wird in einer Nachricht M3 an das IOT Gerät übermittelt. Die Nachricht M3 enthält verbindliche Facts für das nächste Intervall T2 das zum Zeitpunkt t₁ startet. Nach Empfang der Nachricht M3 wird im IOT gerät ein Programmablauf S6 durchgeführt.

In Programmablauf S6 wird überprüft ob der Block zu einer Kollision führen würde Q3. Falls nicht, wird der Block akzeptiert und die das Gerät betreffenden Facts (Bewegungsanweisungen) des Blocks ausgeführt S7.

Falls jedoch eine Kollision zu erwarten ist, wird von der betroffenen Vorrichtung vorzugsweise eine selbstberechnete Lösung ausgeführt und/oder eine Sicherheitsmaßnahme, vorzugsweise eine Bremsung oder ein Ausweichmanöver, veranlasst.

In diesem Fall würde der Knoten aus dem Ledger fallen und müsste für ein nachfolgendes Intervall neu in den Ledger synchronisiert werden um an weiteren Abstimmungen für nachfolgende Intervalle teilnehmen zu können.

In jedem Fall wird in einer Nachricht M4 ein Status an den MEC Masterknoten 600 gesendet. Im MEC Masterknoten 600 werden im Schritt S8a die M4 Nachrichten der teilnehmenden IoT Geräte 500 gesammelt und der Block im Masterknoten zum Ledger hinzugefügt.

Durch die Auswertung der erhaltenen M4 wird der Status der IoT-Geräte mitgeloggt und analysiert welche Geräte sich innerhalb des DCN konform verhalten, um entsprechende Maßnahmen für zukünftige Abstimmungsrunden zu etablieren.

Die Schritte von B1/B2 bis S8b stellen die Konsenzabstimmung im Sinne des Blockchainprinzips dar, wobei dem Gerät die Freiheit gegeben wird, unter bestimmten Gründen nicht die vorgegebene Bewegung durchzuführen.

Die beiden Abschnitte t₀-t_{d} und t_{d}-t₁ sind in dieser Beschreibung nur zum Zwecke einer übersichtlicheren Darstellung nacheinander angeordnet. In einer Implementierung können aus Effizienzgründen beide Abschnitte parallel für verschiedene zukünftige Intervalle ablaufen, und/oder Nachrichten M1 und M4 sowie M2 und M3 zusammengefasst werden. Auch können je nach verwendetem Konsenzalgorithmen zusätzliche Nachrichten ausgetauscht werden, etwa in einer pre-commit-Phase und einer commit-Phase, um das Empfangen der Nachrichten und eine erfolgreiche Konsenzbildung sicherzustellen.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend.

## Patentansprüche

1. Verfahren zur Abstimmung mindestens einer Bewegung von mindestens zwei autonomen Vorrichtungen (100, 101) in Bezug zueinander in einem geplanten Zeitintervall (T2) während eines aktuellen Zeitintervalls (T1),
wobei mindestens eine erste Vorrichtung (100, 101) konfiguriert ist, eine Bewegung durchzuführen und konfiguriert ist, diese Bewegung auf Basis eines Abstimmungsergebnisses für das geplante Zeitintervall (T2) zu ändern;
wobei die Vorrichtungen über mindestens eine Netzwerkverbindung für einen Datenaustausch miteinander verbunden sind;
wobei die Vorrichtungen jeweils mindestens einen Distributed Konsensus Netzwerk, DCN, Knoten (500, 600) aufweisen und die DCN-Knoten (500, 600) konfiguriert sind, an einem DCN Prozess teilzunehmen; und
wobei das Verfahren im aktuellen Zeitintervall (T1) folgende Schritte aufweist:
i) Austauschen von Informationen zur Planung der Bewegungen im geplanten Zeitintervall (T2) unter den DCN-Knoten (500, 600) der mindestens zwei Vorrichtungen,
ii) Durchführen eines Programmablaufs zum Bewerten der empfangenen Informationen über das geplante Zeitintervall (T2) in einem jeden DCN-Knoten,
iii) Abstimmen der Bewegungen der Vorrichtungen bezüglich der jeweils anderen Vorrichtung(en) in dem geplanten Zeitintervall (T2) unter Verwendung eines Konsens-Algorithmus in dem zwischen den DCN-Knoten in mindestens einer Konsens-Abstimmungsrunde Vorschläge für die Bewegungen der Vorrichtung(en) in dem geplanten Zeitintervall (T2) mit den anderen DCN-Knoten ausgetauscht werden,
iv) Aufnehmen des ermittelten Konsens über die Bewegungen der Vorrichtungen in dem geplanten Zeitintervall (T2) als verbindliche Handlungsanweisung für den jeweiligen DCN Knoten für das geplante Zeitintervall (T2) als ein nächster Block in einem Distributed Ledger, DL, und
v) Ändern der Bewegungen der Vorrichtung(en) basierend auf dem aufgenommenen Block für das geplante Zeitintervall, (T2) wenn basierend auf dem Ausführungsergebnis eines Programmablaufs, der die nach dem Austausch mit den anderen Vorrichtungen vorliegenden Daten und den aufgenommenen Block berücksichtigt, eine Kollision mit den anderen Vorrichtungen ausgeschlossen ist, wobei das geplante Zeitintervall (T2) dynamisch, basierend auf den ausgetauschten Informationen zur Planung der Bewegungen im geplanten Zeitintervall (T2), angepasst wird und wobei die Dauer und der Zeitpunkt, an dem das geplante Zeitintervall (T2) beginnt, Teil des ausgehandelten Konsenses ist.

2. Verfahren nach Anspruch 1,
wobei die Informationen zur Planung der Bewegungen im geplanten Zeitintervall (T2)
mindestens Informationen über eine eindeutige Identifikation der Vorrichtung (100, 101), eine aktuelle Position, eine aktuelle Geschwindigkeit, und eine geplante Bewegung enthalten.

3. Verfahren nach Anspruch 1 oder 2, wobei die Informationen zur Planung der
Bewegungen im geplanten Zeitintervall (T2) eine Information über eine Priorität der ersten Vorrichtung (100, 101) gegenüber den anderen Vorrichtungen (100, 101) enthält.

4. Verfahren nach einem der Ansprüche 1 bis 3,
wobei die DCN-Knoten (500, 600) in den Vorrichtungen (100, 101) dazu konfiguriert sind an mindestens einem gemeinsamen DCN-Prozess teilzunehmen, wenn sie sich in einem vorbestimmten gemeinsamen räumlichen Bereich befinden.

5. Verfahren nach einem der Ansprüche 1 bis 4,
wobei mindestens ein weiterer Knoten im DCN enthalten ist,
wobei der weitere Knoten ein Master-Knoten ist.

6. Verfahren nach Anspruch 5,
wobei der Master-Knoten (600) die räumliche Ausdehnung des vorbestimmten gemeinsamen räumlichen Bereichs bestimmt, und/oder
wobei der Master-Knoten bestimmt, welche DCN-Knoten (500, 600) sich innerhalb des vorbestimmten gemeinsamen räumlichen Bereichs befinden und/oder an dem DCN-Prozess teilnehmen.

7. Verfahren nach einem der Ansprüche 5 oder 6,
wobei der Master-Knoten (600) dazu konfiguriert ist, das DL zu archivieren und den DCN-Prozess auszuwerten.

8. Verfahren nach einem der Ansprüche 5 bis 7,
wobei der Master-Knoten (600) dazu konfiguriert ist, neue Programmabläufe an die DCN-Knoten (500, 600) im DCN zu verteilen,
wobei die DCN-Knoten (500, 600) dazu konfiguriert sind, neue Programabläufe von dem Master-Knoten (600) zu empfangen; und
wobei die neuen Programabläufe bevorzugt Programmabläufe zum Bewerten der empfangenen Informationen aus Schritt ii) oder v) sind.

9. Verfahren nach einem der Ansprüche 5 bis 8,
wobei mindestens ein DCN-Knoten, vorzugweise ein Master-Knoten dazu konfiguriert ist, ein entscheidungstragender Knoten zu sein, und in der Abstimmung im Schritt iv) eine Entscheidung über die Bewegungen der Vorrichtungen in dem geplanten Zeitintervall (T2) herbeiführen zu können,
wobei mindestens ein DCN-Knoten, vorzugweise ein Master-Knoten dazu konfiguriert ist, ein entscheidungstragender Knoten zu sein, und das Zeitfenster für den nächsten Bewegungsblock festlegen zu können und/oder
wobei der entscheidungstragende Knoten die Zeit t_{d} bestimmt, die den Zeitpunkt festlegt an dem die Abstimmung beendet und der neue Block festgelegt wird.

10. Verfahren nach einem der Ansprüche 5 bis 9,
wobei der Master-Knoten (600) in einem Mobile Edge Computing (MEC) Server ausgebildet ist, der vorzugweise an einer Infrastrukturkomponente, insbesondere bevorzugt an einer Mobilfunk Basisstation, bereitgestellt ist, und/oder
wobei die eine der autonomen Vorrichtungen ein Teilnehmer im Straßen-, Schienen-, Flug- oder Schiffsverkehr ist und/oder
wobei die andere der autonomen Vorrichtungen eine Vorrichtung zur Koordinierung des Straßen-, Schienen-, Zug-, Schiffs- oder Flugverkehrs ist.

11. Verfahren nach einem der Ansprüche 1 bis 10,
wobei das DCN unter Nutzung einer Netzwerktechnologie gebildet wird, die eine vorbestimmte Verfügbarkeit, eine vorbestimmte Latenz, und/oder einer vorbestimmten Datendurchsatz hat; und/oder
wobei das DCN unter Nutzung von mindestens einer der folgenden Netzwerktechnologien gebildet wird: Mobilfunk-Datenverbindung, WiFi-Datenverbindung, Bluetooth-Datenverbindung, und/oder optische Datenverbindung.

12. Vorrichtung zur Abstimmung einer Bewegung von mindestens zwei autonomen Vorrichtungen (100, 101) in Bezug zueinander in einem geplanten Zeitintervall, wobei die Vorrichtung mindestens zwei DCN-Knoten (500, 600) aufweist und dazu konfiguriert ist, ein Verfahren nach einem der Ansprüche 1 bis 9 durchzuführen.

13. System zur Abstimmung einer Bewegung von mindestens zwei autonomen Vorrichtungen (100, 101) in Bezug zueinander in einem geplanten Zeitintervall (T2),
wobei das System mindestens zwei Vorrichtungen nach Anspruch 10 aufweist, die über ein Backend verbunden sind, und
das Backend dazu konfiguriert ist, ein lokales, regionales, nationales und/oder internationales DCN-Netzwerk zu bilden.

14. System aus Anspruch 13,
wobei das Backend dazu konfiguriert ist, die Master-Knoten (600) zu überwachen, und/oder zu verwalten; und insbesondere dazu konfiguriert ist, Programablaufkomponenten in den Master-Knoten (600) zu löschen, hinzuzufügen und/oder auszutauschen.

## Claims

1. A method of coordinating at least one movement of at least two autonomous devices (100, 101) with respect to each other in a scheduled time interval (T2) during a current time interval (T1),
wherein at least a first device (100, 101) is configured to perform a movement and is configured to change said movement based on a coordination result for the scheduled time interval (T2);
wherein the devices are interconnected via at least one network connection for a data exchange;
wherein the devices each comprise at least one distributed consensus network, DCN, node (500, 600) and the DCN nodes (500, 600) are configured to participate in a DCN process; and
wherein the method comprises the following steps in the current time interval (T1):
i) exchanging information to schedule the movements in the scheduled time interval (T2) among the DCN nodes (500, 600) of the at least two devices,
ii) performing a program flow to evaluate the received information over the scheduled time interval (T2) in each DCN node,
iii) coordinating the movements of the devices with respect to the respective other device(s) in the scheduled time interval (T2) using a consensus algorithm in which, in at least one consensus coordination round, proposals for the movements of the device(s) in the scheduled time interval (T2) are exchanged between the DCN nodes with the other DCN nodes,
iv) recording the determined consensus on the movements of the devices in the scheduled time interval (T2) as a binding action instruction for the respective DCN node for the scheduled time interval (T2) as a next block in a distributed ledger, DL, and
v) changing the movements of the device(s) based on the recorded block for the scheduled time interval (T2) when, based on the execution result of a program flow that takes into account the data available after the exchange with the other devices and the recorded block, a collision with the other devices is excluded,
wherein the scheduled time interval (T2) is dynamically adjusted based on the exchanged information for scheduling the movements in the scheduled time interval (T2), and
wherein the duration and the time point at which the scheduled time interval (T2) begins are part of the determined consensus.

2. The method according to claim 1,
wherein the information for scheduling the movements in the scheduled time interval (T2) includes at least information about a unique identification of the device (100, 101), a current position, a current speed and a scheduled movement.

3. The method according to claim 1 or 2, wherein the information for scheduling the movements in the scheduled time interval (T2) includes information about a priority of the first device (100, 101) over the other devices (100, 101).

4. The method according to any one of claims 1 to 3,
wherein the DCN nodes (500, 600) in the devices (100, 101) are configured to participate in at least one common DCN process, when being located in a predetermined common spatial region.

5. The method according to any one of claims 1 to 4,
wherein at least one further node is included in the DCN,
where the further node is a master node.

6. The method according to claim 5,
wherein the master node (600) determines the spatial extent of the predetermined common spatial region, and/or
wherein the master node determines which DCN nodes (500, 600) are within the predetermined common spatial region and/or participate in the DCN process.

7. The method according to any one of claims 5 or 6,
wherein the master node (600) is configured to archive the DL and evaluate the DCN process.

8. The method according to any one of claims 5 to 7,
wherein the master node (600) is configured to distribute new program flows to the DCN nodes (500, 600) in the DCN,
wherein the DCN nodes (500, 600) are configured to receive new program flows from the master node (600); and
wherein the new program flows are preferably program flows for evaluating the received information from step ii) or v).

9. The method according to any one of claims 5 to 8,
wherein at least one DCN node, preferably a master node, is configured to be a decision-bearing node and in the coordination in step iv) to be able to bring about a decision on the movements of the devices in the scheduled time interval (T2),
wherein at least one DCN node, preferably a master node, is configured to be a decision-bearing node and to be able to set the time window for the next movement block, and/or
wherein the decision-bearing node determines the time t_{d} that sets the time point at which coordination is terminated and the new block is set.

10. The method according to any one of claims 5 to 9,
wherein the master node (600) is formed in a mobile edge computing (MEC) server, which is preferably provided at an infrastructure component, particularly preferably at a mobile radio base station, and/or
wherein the one of the autonomous devices is a participant in road, rail, air, or ship traffic, and/or
wherein the other of the autonomous devices is a device for coordinating road, rail, train, ship, or air traffic.

11. The method according to any one of claims 1 to 10,
wherein the DCN is formed using a network technology having a predetermined availability, a predetermined latency, and/or a predetermined data throughput; and/or
wherein the DCN is formed using at least one of the following network technologies: mobile radio data link, WiFi data link, Bluetooth data link, and/or optical data link.

12. A device for coordinating a movement of at least two autonomous devices (100, 101) with respect to each other in a scheduled time interval, wherein the device comprises at least two DCN nodes (500, 600) and is configured to perform a method according to any one of claims 1 to 9.

13. A system for coordinating a movement of at least two autonomous devices (100, 101) with respect to each other in a scheduled time interval (T2),
wherein the system comprises at least two devices according to claim 10 connected via a backend, and
the backend is configured to form a local, regional, national, and/or international DCN network.

14. The system of claim 13,
wherein the backend is configured to monitor and/or manage the master nodes (600); and, in particular, is configured to delete, add, and/or replace program flow components in the master nodes (600).

## Revendications

1. Procédé de coordination d'au moins un mouvement d'au moins deux dispositifs autonomes (100, 101) l'un par rapport à l'autre dans un intervalle temporel programmé (T2) pendant un intervalle temporel actuel (T1),
où au moins un premier dispositif (100, 101) est configuré pour exécuter un mouvement et est configuré pour modifier ledit mouvement sur la base d'un résultat de coordination pour l'intervalle temporel programmé (T2) :
où les dispositifs sont reliés l'un à l'autre par au moins une connexion réseau pour échange de données ;
où les dispositifs présentent chacun au moins un noeud de réseau de consensus distribué, DCN (500, 600), et où les noeuds DCN (500, 600) sont configurés pour prendre part à un processus DCN ; et
où le procédé comprend les étapes suivantes dans l'intervalle temporel actuel (T1) :
i) échange d'informations pour la planification des mouvements dans l'intervalle temporel programmé (T2) sous les noeuds DCN (500, 600) des au moins deux dispositifs,
ii) déroulement d'un programme pour l'évaluation des informations reçues pendant l'intervalle temporel programmé (T2) dans chaque noeud DCN,
iii) coordination des mouvements des dispositifs par rapport à l'autre ou aux autres dispositifs respectifs dans l'intervalle temporel programmé (T2) en recourant à un algorithme de consensus où sont échangées, entre les noeuds DCN pendant au moins une phase de coordination de consensus, des propositions pour les mouvements du ou des dispositifs dans l'intervalle temporel programmé (T2) avec les autres noeuds DCN,
iv) réception du consensus déterminé sur les mouvements des dispositifs dans l'intervalle temporel programmé (T2) en tant que consigne contraignante pour le noeud DCN respectif pour l'intervalle temporel programmé (T2) comme bloc suivant dans un registre distribué, DL, et
v) modification des mouvements du ou des dispositifs sur la base du bloc reçu pour l'intervalle temporel programmé (T2), si, sur la base du résultat d'un déroulement de programme tenant compte des données existantes après l'échange avec les autres dispositifs et du bloc reçu, une collision avec les autres dispositifs est exclue, l'intervalle temporel programmé (T2) étant ajusté dynamiquement sur la base des informations échangées sur la planification des mouvements dans l'intervalle temporel programmé (T2), et la durée et le moment de commencement de l'intervalle temporel programmé (T2) faisant partie du consensus négocié.

2. Procédé selon la revendication 1,
où les informations pour la planification des mouvements dans l'intervalle temporel programmé (T2) contiennent au moins des informations sur une identification claire du dispositif (100, 101), une position actuelle, une vitesse actuelle et un mouvement planifié.

3. Procédé selon la revendication 1 ou la revendication 2, où les informations pour la planification des mouvements dans l'intervalle temporel programmé (T2) contiennent une information relative à une priorité du premier dispositif (100, 101) sur les autres dispositifs (100, 101).

4. Procédé selon l'une des revendications 1 à 3,
où les noeuds DCN (500, 600) dans les dispositifs (100, 101) sont configurés pour prendre part à au moins un processus DCN commun, s'ils se trouvent dans une zone spatiale commune prédéterminée.

5. Procédé selon l'une des revendications 1 à 4,
où au moins un autre nœud est contenu dans le DCN, ledit autre noeud étant un noeud maître.

6. Procédé selon la revendication 5,
où le noeud maître (600) définit l'extension spatiale de la zone spatiale commune prédéterminée, et/ou
où le noeud maître définit les noeuds DCN (500, 600) qui se trouvent à l'intérieur de la zone spatiale commune prédéterminée et/ou prennent part au processus DCN.

7. Procédé selon la revendication 5 ou la revendication 6,
où le noeud maître (600) est configuré pour archiver le DL et évaluer le processus DCN.

8. Procédé selon l'une des revendications 5 à 7,
où le noeud maître (600) est configuré pour répartir de nouveaux déroulements de programme aux noeuds DCN (500, 600) dans le DCN,
où les noeuds DCN (500, 600) sont configurés pour recevoir de nouveaux déroulements de programme du nœud maître (600) ; et
où les nouveaux déroulements de programme sont préférentiellement des déroulements de programme pour l'évaluation des informations reçues des étapes ii) ou v).

9. Procédé selon l'une des revendications 5 à 8,
où au moins un noeud DCN, préférentiellement un noeud maître, est configuré pour être un noeud déterminant, et pouvoir déclencher lors de la coordination pendant l'étape iv) une décision sur les mouvements des dispositifs dans l'intervalle temporel programmé (T2),
où au moins un noeud DCN, préférentiellement un noeud maître, est configuré pour être un noeud déterminant, et pouvoir définir la fenêtre temporelle pour le bloc de mouvement suivant et/ou
où le noeud déterminant définit le temps t_{d} qui fixe le moment où se termine la coordination et où le nouveau bloc est défini.

10. Procédé selon l'une des revendications 5 à 9,
où le noeud maître (600) est réalisé dans un serveur informatique en périphérie de réseau mobile (MEC), lequel est préférentiellement prévu sur un composant d'infrastructure, en particulier préférentiellement sur une station de base de téléphonie mobile, et/ou
où un premier dispositif autonome est un participant de circulation routière, transport ferroviaire, aérien ou maritime et/ou
où l'autre dispositif autonome est un dispositif pour la coordination de circulation routière, transport ferroviaire, maritime ou aérien.

11. Procédé selon l'une des revendications 1 à 10,
où le DCN est formé en recourant à une technologie de réseau ayant une disponibilité définie, une latence définie et/ou un débit de données défini ; et/ou
où le DCN est formé en recourant à au moins une des technologies de réseau suivantes : connexion de données cellulaires, connexion de données WiFi, connexion de données Bluetooth, et/ou liaison optique de données.

12. Dispositif pour la coordination d'un mouvement d'au moins deux dispositifs autonomes (100, 101) l'un par rapport à l'autre dans un intervalle temporel programmé, où ledit dispositif présente au moins deux noeuds DCN (500, 600) et est configuré pour exécuter un procédé selon l'une des revendications 1 à 9.

13. Système pour la coordination d'un mouvement d'au moins deux dispositifs autonomes (100, 101) l'un par rapport à l'autre dans un intervalle temporel programmé (T2), où ledit système présente au moins deux dispositifs selon la revendication 10, reliés par un back-end, et où
ledit back-end est configuré pour former un réseau DCN local, régional, national et/ou international.

14. Système selon la revendication 13,
où le back-end est configuré pour surveiller et/ou pour administrer le noeud maître (600) ; et est en particulier configuré pour supprimer, ajouter et/ou communiquer des composantes de déroulement de programme dans le noeud maître (600).
